# EUROPEAN PATENT APPLICATION

(11) **EP 3 578 423 A1**
(43) Date of publication of application: **11.12.2019**
(21) Application number: 19178823.1
(22) Date of filing: 06.06.2019
(51) Int. Cl.: B60R 16/06, B64D 45/02, H02G 13/00, H05F 3/02

(54) **ADHESIVELY-MOUNTED RETURN MOUNTS AND METHOD FOR MOUNTING SAME**

(30) Priority: 08.06.2018 US 201862682265 P
(71) Applicant: Bombardier Inc., Dorval, QC H4S 1Y9 (CA)
(72) Inventor: ST-CYR, Martin, Laval, Quebec H7R 5W1 (CA)
(74) Representative: HGF Limited

(57) **Abstract**

An electrically-conductive return mount assembly mountable to an electrically-conductive structure. The assembly has a return mount and a pad. The return mount has a base, and an electrically-conductive portion to conduct electricity to the structure. The pad is positionable between the return mount and the structure, and delimits an internal cavity. The internal cavity is configured to receive therein an adhesive to adhere the base to the structure. The pad is electrically conductive to form a conductive path from the electrically-conductive portion of the return mount, through the pad, and to the structure, upon the base being adhered to the structure. An airframe having such a return mount, as well as a method for mounting same, are also disclosed.

## Description

### TECHNICAL FIELD

The application relates generally to ground-returns in vehicles and, more particularly, to adhesively-mounted return mounts.

### BACKGROUND

Brackets, plates, and other supports are used in aircraft to provide current return paths, also known as ground-return paths. These supports are typically metal bodies that are riveted or bolted to a metal aircraft structure to provide the current return path. Electrical wires can be connected to the supports to direct their electrical energy to the aircraft structure. Holes are typically drilled in the aircraft structure to receive the supports by way of rivets or bolts. Stress assessments often must be conducted prior to drilling holes in the aircraft structure to ensure the integrity of the aircraft structure. Furthermore, not every aircraft structure or part thereof is capable of having holes drilled therein, which limits the locations of the holes and corresponding supports, and may thus require longer electrical wires which can add weight and cost to the aircraft.

### SUMMARY

In one aspect, there is provided an aircraft, comprising: an airframe including a structural member; a return mount having a base mounted to the structural member, the base defining a base surface facing toward the structural member, the return mount having an electrically-conductive portion to conduct electricity to the structural member; a pad disposed between the return mount and the structural member, the pad having a first surface abutting against the base surface and an opposed second surface abutting against the structural member, the pad at least partially delimiting an internal cavity that defines an adhesive-receiving zone between the base surface and the structural member, the pad being electrically conductive and forming a conductive path from the electrically-conductive portion of the return mount, through the pad, and to the structural base
base of the return mount to the structural member.

In an embodiment of the aircraft, it further comprises a grounding element mounted to the electrically-conductive portion of the return mount, the grounding element having a first electrical resistance value and the conductive path having a second electrical resistance value being equal to or less than the first electrical resistance value.

In an embodiment of the aircraft, the pad includes at least one pad segment completely delimiting the internal cavity to form a closed-periphery internal cavity.

In an embodiment of the aircraft, the at least one pad segment includes a plurality of pad segments, each pad segment being connected to another pad segment to completely delimit the internal cavity.

In an embodiment of the aircraft, the at least one pad segment is free of apertures from the first surface to the second surface.

In an embodiment of the aircraft, the electrically-conductive portion of the return mount includes at least part of the base, and an element-receiving portion extending from said part of the base in a direction away from the structural member, the electrically-conductive portion having an aperture, the aircraft further comprising a grounding element mounted to the electrically-conductive portion via the aperture, the grounding element having a first electrical resistance value and the conductive path having a second electrical resistance value being equal to or less than the first electrical resistance value.

In an embodiment of the aircraft, the base has at least one opening extending therethrough and being in fluid communication with the adhesive-receiving zone, the adhesive being injectable into the adhesive-receiving zone through the at least one opening.

In an embodiment of the aircraft, the adhesive includes a material being electrically insulating.

In an embodiment of the aircraft, the pad is a gasket and forms a seal between the base and the structural member at least partially around the internal cavity.

In an embodiment of the aircraft, the base of the return mount is secured to the structural member only via the adhesive.

In an embodiment of the aircraft, the pad is compressible along a direction between the first and second surfaces.

An electrically-conductive mount assembly mountable to an electrically-conductive structure, the mount assembly comprising: a return mount having a base defining a base surface to face toward the structure, the return mount having an electrically-conductive portion to conduct electricity to the structure; and an electrically-conductive pad positioned on the base surface of the return mount, and having a surface abuttable against the structure, the pad at least partially delimiting an internal cavity configured to receive therein an adhesive to adhere the base to the structure, the pad being electrically conductive to form a conductive path from the electrically-conductive portion of the return mount, through the pad, and to the structure, upon the base being adhered to the structure.

In an embodiment of the mount assembly, the pad includes at least one pad segment completely delimiting the internal cavity to form a closed-periphery internal cavity.

In an embodiment of the mount assembly, the at least one pad segment includes a plurality of pad segments, each pad segment being connected to another pad segment to completely delimit the internal cavity.

In an embodiment of the mount assembly, the at least one pad segment is free of apertures.

In an embodiment of the mount assembly, the electrically-conductive portion of the return mount includes at least part of the base, and an element-receiving portion extending from said part of the base, the element-receiving portion having an aperture.

In an embodiment of the mount assembly, the base has at least one opening extending therethrough and being in fluid communication with the internal cavity, the adhesive being injectable into the internal cavity through the at least one opening.

In an embodiment of the mount assembly, the pad is a gasket and forms a seal between the base and the structure at least partially around the internal cavity upon the pad being abutted against the base surface and the surface of the pad being abutted against the structure.

In an embodiment of the mount assembly, the pad is compressible along a direction parallel to its thickness.

A method for mounting an electrically-conductive return and an electrically-conductive pad onto a structure of a vehicle, the pad being mounted to a base of the return, the method comprising: abutting a pad against the structure to mount the return and the pad to the structure, the pad delimiting an internal cavity; applying an adhesive into the internal cavity; and curing the adhesive to secure the return to the structure, and to form a conductive path from at least part of the return, through the pad, and to the structure.

In an embodiment of the method, the method further includes compressing the pad between the return and the structure.

In an embodiment of the method, applying the adhesive includes injecting the adhesive in the internal cavity through an opening defined in the return.

In an embodiment of the method, applying the adhesive includes injecting the adhesive in the internal cavity through a first opening defined in the return and flowing the adhesive out of a second opening defined in the return.

In an embodiment of the method, the method further includes attaching a grounding element to the at least part of the return, the grounding element having a first electrical resistance value and the conductive path having a second electrical resistance value being equal to or less than the first electrical resistance value.

In an embodiment of the method, applying the adhesive includes confining the adhesive to the internal cavity within the pad.

In an embodiment of the method, abutting the pad against the structure includes providing a pad being free from apertures extending therethrough.

In an embodiment of the method, curing the adhesive includes abutting the pad against the structure without forming apertures in the structure.

In an embodiment of the method, curing the adhesive includes clamping the return and the pad to the structure while curing the adhesive.

### DESCRIPTION OF THE DRAWINGS

Reference is now made to the accompanying figures in which:
Fig. 1 is a schematic perspective view of an aircraft;
Fig. 2 is a schematic perspective view of an electrically-conductive return mount mounted to a structural member of the aircraft of Fig. 1, according to an embodiment of the present disclosure;
Fig. 3A is a perspective view of the return mount of Fig. 2;
Fig. 3B is another perspective view of the return mount of Fig. 2;
Fig. 4A is a perspective view of an electrically-conductive return mount, according to another embodiment of the present disclosure, mounted to a structural member of the aircraft of Fig. 1;
Fig. 4B is a cross-sectional view of the return mount of Fig. 4A taken along the line 4B-4B in Fig. 4A;
Fig. 5A is a perspective view of an electrically-conductive return mount, according to another embodiment of the present disclosure, mountable to a structural member of the aircraft of Fig. 1;
Fig. 5B is another perspective view of the return mount of Fig. 5A; and
Fig. 6 is a schematic cross-sectional view of an electrically-conductive return mount, according to another embodiment of the present disclosure, mounted to a structural member of the aircraft of Fig. 1.

### DETAILED DESCRIPTION

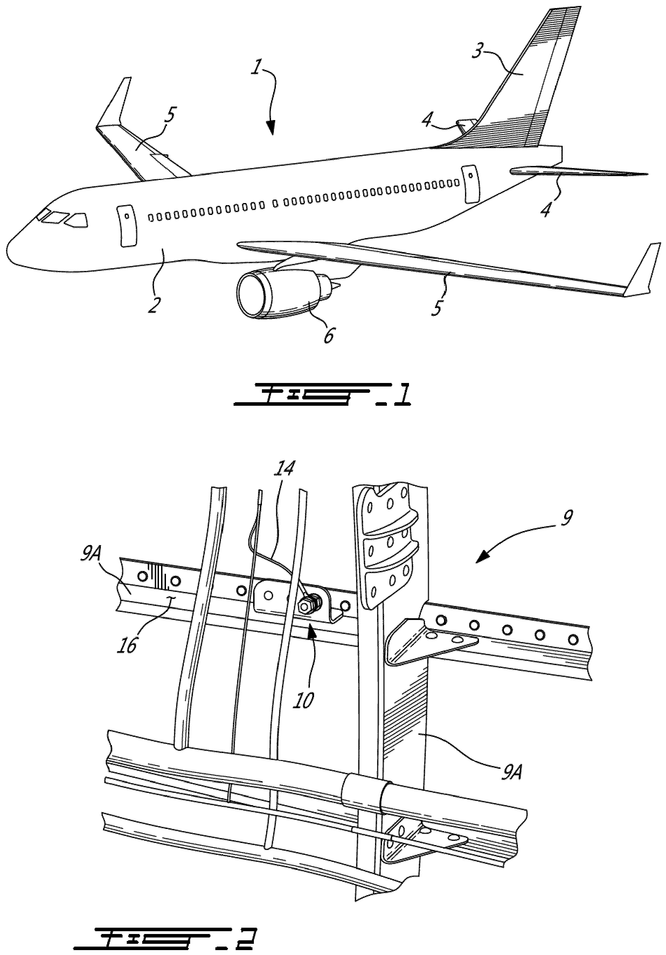

Referring to Fig. 1, an aircraft is shown at 1 and is generally described to illustrate some components for reference purposes in the present disclosure. The aircraft 1 has a fuselage 2 having a fore end at which a cockpit can be located, and an aft end supporting a tail assembly, with the cabin generally located between the fore end and the aft end. The tail assembly has a fuselage-mounted tail, but other configurations may also be used for the aircraft 1, such as cruciform, T-tail, etc. The tail assembly includes a vertical stabilizer 3 with a rudder, and horizontal stabilizers 4 with elevators. The aircraft includes wings 5 that project laterally from the fuselage 2. The aircraft 1 has engines 6 supported by the wings 5, although the engines 6 could also be mounted to the fuselage 2. The aircraft 1 is shown as a jet-engine aircraft, but may also be a propeller aircraft. It is also understood that although Fig. 1 shows a commercial aircraft, the aircraft 1 may alternately be any other type of aircraft, including, but not limited to, a business aircraft or a private aircraft.

Fig. 2 illustrates a section of the fuselage 2 of aircraft 1. More particularly, Fig. 2 shows part of an airframe 9, which forms the internal mechanical structure of the fuselage 2. The airframe 9 includes multiple structures or structural members 9A. One or more of the structural members 9A provides a return for a current, commonly known as "grounding", to divert electrical charges to an aircraft electrical ground. Grounding can be used to remove and control static electrical accumulations on the aircraft 1. The aircraft 1 has one or more electrically-conductive return mounts 10 that are mounted to a surface 16 of one or more of the structural members 9A to receive a grounding element 14, such as an electrical wire, an electrical rod, or a wire harness connected to various aircraft systems, to provide an electrical return or grounding path to the aircraft electrical ground. The return mounts 10 therefore serve as electrical interfaces between the grounding element 14 and the structural member 9A.

One or more of the structural members 9A is at least partially electrically-conductive to provide an intended path for propagation of electrical energy from the electrically-conductive return mounts 10. The structural member 9A helps to divert energy from where it is not desired to a desired path. If required, non-conductive finishes, such as paints and films, may be removed from the surface 16 of the structural member 9A to decrease electrical resistance between the structural member 9A and the electrically-conductive return mounts 10. Although shown in Fig. 2 as being part of the airframe 9, the structural member 9A may be a component of any part of the aircraft 1, such as other parts of the fuselage 2, the wing 5, or internal aircraft systems. The structural member 9A may be made from a metal, such as aluminum or an alloy thereof. The structural member 9A may also be made from a composite material which is at least partially electrically conductive.

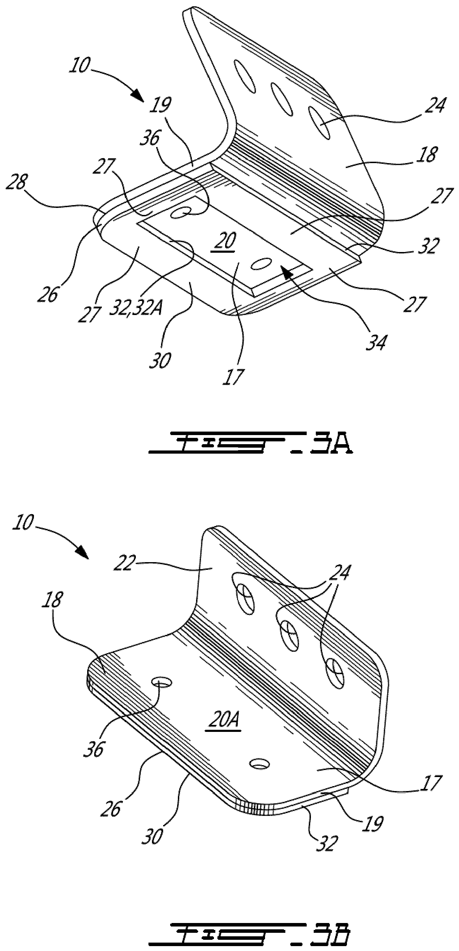

The electrically-conductive return mount 10 (sometimes simply referred to herein as the "mount 10") is shown in isolation in Figs. 3A and 3B. The mount 10 has a body 18 that includes a base 19. The base 19 is the portion of the body 18 that is secured to the structural member 9A via another component, as described in greater detail below. The base 19 defines a base surface 20 which faces toward the surface 16 of the structural member 9A when the mount 10 is mounted thereto.

The body 18, or some part thereof, is electrically conductive in order to provide the grounding functionality described above. More particularly, the body 18 has one or more electrically-conductive portions 17 to conduct electricity through the mount 10 and to the structural member 9A. In Figs. 3A and 3B, the body 18 is made entirely of aluminum, and the electrically-conductive portion 17 is therefore the entirety of the body 18. In alternate embodiments, the electrically-conductive portion 17 is less than the entirety of the body 18. In such embodiments, a portion of the body 18 is made from a non-electrically conductive material (e.g. composite, ceramic, wood, etc.) or from a material that is less electrically-conductive than the remainder of the body 18. In such embodiments, the electrically-conductive portion 17 extends through only those portions of the body 18 that are electrically conductive.

Still referring to Figs. 3A and 3B, the body 18 has an "L" shape, and the return mount 10 is therefore an "L"-shaped bracket. Part of the electrically-conductive portion 17 of the body 18 therefore extends away from the base 19 at an angle thereto. More particularly, the body 18 has an element-receiving segment 22 that is at an angle to the base 19 (in the example shown in Figs. 3A and 3B, the element-receiving segment 22 is substantially perpendicular to the base 19), and which extends from the base 19 in a direction away from the structural member 9A when the return mount 10 is mounted thereto. The element-receiving segment 22 is configured to receive the grounding element 14 (shown in Fig. 2) to electrically link the grounding element 14 to the electrically-conductive portion 17 of the body 18. In the embodiment shown in Figs. 3A and 3B, the element-receiving segment 22 has three apertures 24 defined through the element-receiving segment 22 to receive grounding elements 14, and to secure them thereto with a suitable mechanical fastener. It is understood that any other suitable number of apertures 24 may be formed in the element-receiving segment 22. In an alternate embodiment, the element-receiving segment 22 is free from apertures 24, and other connection means between the grounding element 14 and the body 18 are used.

An electrically-conductive pad 26 is positioned between the return mount 10 and the surface 16 of the structural member 9A when the mount 10 is mounted thereto. The electrically-conductive pad 26 (sometimes simply referred to herein as the "pad 26") has a top surface 28 to abut the base surface 20, and an opposed bottom surface 30 to abut the surface 16 of the structural member 9A. Side surfaces 32 of the pad 26 extend between the top and bottom surfaces 28,30, and a length of the side surfaces 32 defines a thickness of the pad 26. The term "electrically-conductive" refers to a property of the pad 26, in that it is capable of conducting electricity through the pad 26 between the top and bottom surfaces 28,30. The electrical conductivity of the pad 26 in the depicted embodiment is derived from its material composition. For example, the pad 26 is made from a polymer which is electrically conductive. In an embodiment, the pad 26 is made from a polymer material with a conductive meshing. In another embodiment, the pad 26 is made from a compressible material with metallic particles. One possible example of the pad 26 is the line of HI-TAK™ conductive gaskets. The pad 26 is compressible in a direction between the top and bottom surfaces 28,30. The pad 26 is therefore compressible to reduce its thickness (i.e. to reduce a length of the side surfaces 32) to help improve the electrical conductivity of the pad 26. In use, the pad 26 may be compressed and mounted between the mount 10 and the structural member 9A to increase the conductivity through the pad 26. It will be appreciated that relative terms such as, "top", "bottom", "side", "horizontal", "vertical", and the like are used herein to describe one element's relationship to another element as illustrated in the figures. It is understood that these relative terms are intended to encompass different orientations of the elements in addition to the orientation depicted in the figures.

Still referring to Figs. 3A and 3B, the pad 26 includes one or more pad segments 27. One or more of the pad segments 27 is electrically conductive. Each pad segment 27 defines part of the periphery of the pad 26, and is connected to or integral with one or more of the other pad segments 27. In an alternate embodiment, each pad segment 27 is separate and independent of other pad segments 27. In Figs. 3A and 3B, the pad 26 has four pad segments 27 which are interconnected to define a rectangular periphery for the pad 26. More or fewer pad segments 27 are possible. Other arrangements of the pad segments 27 are possible and within the scope of the present disclosure, and at least one alternate embodiment is described in greater detail below. The pad segments 27 may provide any suitable shape to the pad 26, including but not limited to, circular, oval, and polygonal.

The pad 26 has an internal cavity 34. The internal cavity 34 is an opening in the pad 26 that extends between the top and bottom surfaces 28,30. The cavity 34 is at least partially delimited and defined by the pad segments 27. The pad segments 27 therefore define one or more of the boundaries or limits of the cavity 34. More particularly, inner side surfaces 32A of the pad segments 27 delimit the cavity 34. In the depicted embodiment, the pad segments 27 completely delimit the cavity 34 between the top surface 28 and the bottom surface 30, such that the cavity 34 is closed on all sides and is a closed-periphery internal cavity 34. A closed circuit or loop of pad segments 27 therefore delimit the cavity 34. The inner side surfaces 32A of the pad segments 27 are continuous to form a continuous perimeter of the cavity 34. In an alternate embodiment, the pad segments 27 partially delimit the cavity 34, such that the cavity 34 is open along one or more sides. In an example of this embodiment, the pad 26 has three pad segments 27 which are perpendicular to each other and interconnected to give the pad 26 a "C"-shape. The cavity 34 is delimited by the three pad segments 27, and open along one side. In this embodiment, the pad segments 27 do not form a closed circuit or loop, and the cavity 34 is therefore not completely closed by the inner side surfaces 32A of the pad segments 27. Other shapes for the pad 26, the pad segments 27, and the cavity 34 defined by the pad segments 27 are possible and within the scope of the present disclosure.

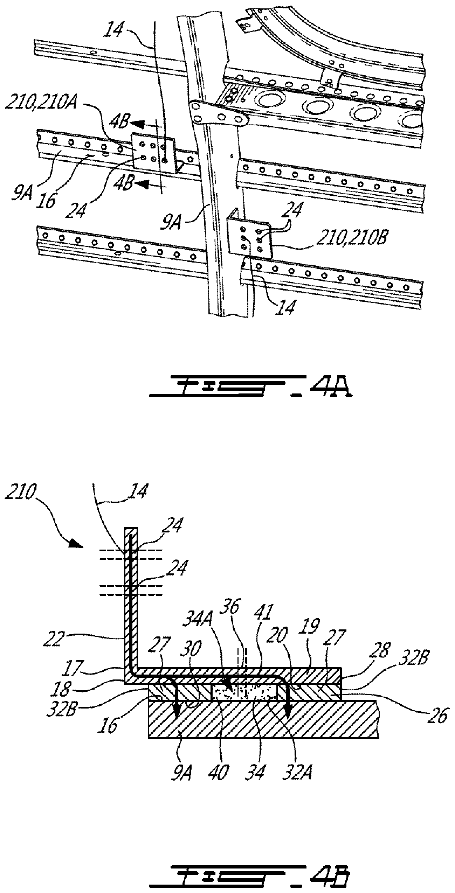

Another embodiment of the return mount 210 is shown in Figs. 4A and 4B. The return mount 210 is similar to the return mount 10 described above, and like numerals are intended to indicate like parts. When the return mount 210 is mounted to the structural member 9A, and as better shown in Fig. 4B, the pad 26 and the pad segments 27 are positioned between the base surface 20 of the base 19 of the body 18, and the surface 16 of the structural member 9A. The cavity 34 delimited by the pad segments 27 is therefore bound by the base 19 and by the structural member 9A, to define an adhesive-receiving zone 34A for receiving an adhesive 40 that bonds the body 18 of the return mount 210 to the structural member 9A when the adhesive 40 is cured. The adhesive 40 is therefore disposed in the adhesive-receiving zone 34A. The adhesive 40 may include a structural epoxy adhesive, such as LORD™ 201/19 acrylic adhesive or CB200 acrylic adhesive. In the depicted embodiment, the adhesive 40 includes a material that is electrically insulating. The adhesive 40 is therefore not electrically-conductive.

Referring to Fig. 4B, a conductive path 41 is defined through the return mount 210 and the pad 26 when the return mount 210 is mounted to the structural member 9A. More particularly, the electrically-conductive pad 26 and the pad segments 27 complete the conductive path 41, which extends along the electrically-conductive portion 17 of the return mount 210, through one or more of the pad segments 27, and to the structural member 9A. The conductive path 41 is a return or grounding path in the depicted embodiment, which directs electrical energy from the electrically-conductive portion 17 of the return mount 210 to the structural member 9A. The conductive path 41 extends along those portions of the return mount 210 and the pad 26 which have less electrical resistance than other portions of the return mount 210 and the pad 26. For example, and as shown in Fig. 4B, the conductive path 41 extends from the electrically-conductive portions 17 of the body 18 (i.e. the element-receiving segment 22 and the base 19), through both electrically-conductive pad segments 27 shown, and into the structural member 9A. The conductive path 41 does not extend through the adhesive 40 which, in Fig. 4B, is electrically insulating.

Still referring to Figs. 4A and 4B, the grounding element 14 is mounted through one of the apertures 24 in the element-receiving segment 22 of the body 18. The grounding element 14 has a first electrical resistance value, typically measured in ohms (Ω). The components which make up the conductive path 41, that is to say the electrically-conductive portion 17 of the return mount 210 (i.e. the element-receiving segment 22 and the base 19), the pad segments 27, and the structural member 9A, collectively define a second electrical resistance value, also typically measured in ohms (Ω). The second electrical resistance value of the conductive path 41 is equal to or less than the first electrical resistance value of the grounding element 14. Electrical energy is therefore free to flow from the grounding element 14, along the conductive path 41 and into the structural member 9A. The return mount 210 therefore forms a grounding plate or member when used in conjunction with the electrically-conductive pad 26.

Fig. 4A illustrates a first return mount 210A mounted horizontally on a horizontal structural member 9A and a second return mount 210B mounted on a vertical structural member 9A. It will therefore be appreciated that the adhesive-receiving zone 34A of the pad 26, as well as the ability to secure the return mount 210 to the structural member 9A with the adhesive 40, increases the number of locations at which the return mount 210 may be positioned. This versatility may allow the grounding elements 14 to be shorter in length, and thus for their weight to be reduced. This versatility may also allow the return mount 210 to be mounted to weaker portions of the structural member 9A which would not be able to support drilled holes therein.

In Figs. 4A and 4B, the adhesive 40 is the only connection between the return mount 210 and the structural member 9A. The base 19 of the return mount 210 is therefore secured to the structural member 9A only via the adhesive 40. Therefore, no rivets, bolts, or other mechanical fasteners are needed to attach the return mount 210 to the structural member 9A, and it is therefore possible to avoid drilling holes into the structural member 9A which would be labor intensive and require a stress analysis.

Referring to Fig. 4B, the top surface 28 of the pad 26 abuts against the base surface 20 of the base 19, and the bottom surface 30 of the pad 26 abuts against the surface 16 of the structural member 9A. The adhesive-receiving zone 34A is therefore delimited by the pad segments 27, the base surface 20, and the surface 16 of the structural member 9A. The pad 26 in the depicted embodiment is a gasket, which forms a mechanical seal around the cavity 34 between the base 19 and the structural member 9A.

In the embodiment shown in Fig. 4B, the body of the pad 26 is free of apertures that extend through other than the internal cavity 34. The pad segments 27 are integral and complete bodies. The pad segments 27 are free of apertures extending therethrough from the top surface 28 to the bottom surface 30, in a portion of the pad segments 27 defined between the inner side surfaces 32A and outer side surfaces 32B. The only opening in the pad 26 is therefore the cavity 34, which is delimited by the pad segments 27. All of the pad segments 27 are made from electrically-conductive material, and in the depicted embodiment, there are no apertures in the electrically-conductive material of the pad segments 27.

Referring to Figs. 3B and 4B, the base 19 has one or more openings 36 defined therethrough. In the embodiment shown in Fig. 3B, the base 19 includes two openings 36, and in the embodiment shown in Fig. 4B, the base 19 includes only one opening 36. Each opening 36 provides fluid communication with the adhesive-receiving zone 34A or cavity 34 to inject the adhesive 40 into the adhesive-receiving zone 34A or cavity 34 through the openings 36. In use, the adhesive 40 may be injected in one opening 36 to fill the adhesive-receiving zone 34A until some of the adhesive 40 comes out from the other opening 36. The openings 36 may be sized and placed in the base 19 based on the depth and size of the adhesive-receiving zone 34A or cavity 34.

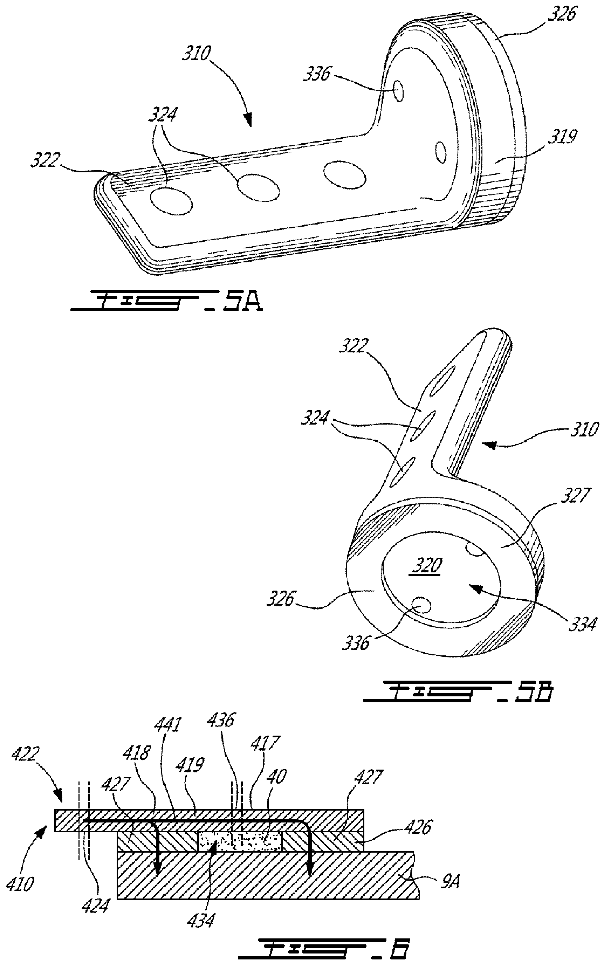

Figs. 5A and 5B show another embodiment of the return mount 310 and the pad 326. The return mount 310 is similar to the return mounts 10,210 described above, and like numerals are intended to indicate like parts. The pad 326 is circular in shape, and has a concentric circular cavity 334 defined and delimited by the single, circular pad segment 327. The return mount 310 has two openings 336 in the circular base 319 in fluid communication with the internal cavity 334. The element-receiving segment 322 extending from the base 319 has three apertures 324.

Fig. 6 shows a cross-section of another embodiment of the return mount 410 mounted to the structural member 9A via the pad 426. The return mount 410 has an elongated body 418 including a base 419 and the element-receiving segment 422 extending from one end of the base 419 and being parallel thereto. The element-receiving segment 422 includes an aperture 424 defined therethrough to receive the grounding element 14. The base 419 includes openings 436 to inject the adhesive 40 into the internal cavity 434. The electrically-conductive portion 417 of the body 418, as well as the conductive path 441, extend from the element-receiving segment 422, to the base 419, through the pad segments 427, and into the structural member 9A.

Referring to Figs. 4A and 4B, there is also disclosed a method for mounting the return 210 and the pad 26 onto the structural member 9A. The method includes abutting the pad 26 against the structural member 9A. Prior to abutting the pad 26, the surface 16 of the structural member 9A may be cleaned by removing paint or other impurities to improve conductivity. The method may also include abutting the return mount 210 against the pad 26 to at least partially bound the cavity 34 between the return mount 210 and the structural member 9A, in embodiments where the return mount 210 and pad 26 are provided separately. At this point, the return mount assembly formed by the return mount 210 and the pad 26 may be clamped to the structural member 9A. The method also includes applying the adhesive 40 into the cavity 34. The adhesive 40 may be injected through the openings 36 in the base 19. In an alternate embodiment where the pad segments 27 do not form a fully-closed cavity 34, the adhesive 40 may be applied between the return mount 210 and the structural member 9A by inserting it through the open side of the pad 26 and into the cavity 34. The method also includes curing the adhesive 40 to mount the return mount 210 to the structural member 9A, and to define the conductive path 41. Once cured, any clamps may be removed, and the bond between the return mount 210 and the structural member 9A may be tested.

The above description is meant to be exemplary only, and one skilled in the art will recognize that changes may be made to the embodiments described without departing from the scope of the invention disclosed. For example, although described herein as being used with an aircraft 1 or on an airframe 9 of the aircraft 1, it will be appreciated that the return mount 10,210,310,410 may be used on the structure of any other suitable vehicle having electrical grounding or routing requirements. Still other modifications which fall within the scope of the present invention will be apparent to those skilled in the art, in light of a review of this disclosure, and such modifications are intended to fall within the appended claims.

## Claims

1. An aircraft, comprising:
an airframe (9) including a structural member (9A);
a return mount (10) having a base (19) mounted to the structural member (9A), the base (19) defining a base surface (20) facing toward the structural member (9A), the return mount (10) having an electrically-conductive portion (17) to conduct electricity to the structural member (9A);
a pad (26) disposed between the return mount (10) and the structural member (9A), the pad (26) having a first surface (28) abutting against the base surface (20) and an opposed second surface (30) abutting against the structural member (9A), the pad (26) at least partially delimiting an internal cavity (34) that defines an adhesive-receiving zone (34A) between the base surface (20) and the structural member (9A), the pad (26) being electrically conductive and forming a conductive path (41) from the electrically-conductive portion (17) of the return mount (10), through the pad (26), and to the structural member (9A); and
an adhesive (40) disposed in the adhesive-receiving zone (34A) for securing the base (19) of the return mount (10) to the structural member (9A).

2. The aircraft as defined in claim 1, further comprising a grounding element (14) mounted to the electrically-conductive portion (17) of the return mount (10), the grounding element (14) having a first electrical resistance value and the conductive path (41) having a second electrical resistance value being equal to or less than the first electrical resistance value.

3. The aircraft as defined in claim 1 or 2, wherein the pad (26) includes at least one pad segment (27) completely delimiting the internal cavity (34) to form a closed-periphery internal cavity (34).

4. The aircraft as defined in claim 3, wherein the at least one pad segment (27) includes a plurality of pad segments (27), each pad segment (27) being connected to another pad segment (27) to completely delimit the internal cavity (34).

5. The aircraft as defined in claims 3 or 4, wherein the at least one pad segment (27) is free of apertures from the first surface (28) to the second surface (30).

6. The aircraft as defined in any one of claims 1 to 5, wherein the electrically-conductive portion (17) of the return mount (10) includes at least part of the base (19), and an element-receiving portion (22) extending from said part of the base (19) in a direction away from the structural member (9A), the electrically-conductive portion (17) having an aperture, the aircraft further comprising a grounding element (14) mounted to the electrically-conductive portion (17) via the aperture, the grounding element (14) having a first electrical resistance value and the conductive path having a second electrical resistance value being equal to or less than the first electrical resistance value.

7. The aircraft as defined in any one of claims 1 to 6, wherein the base (19) has at least one opening (36) extending therethrough and being in fluid communication with the adhesive-receiving zone (34A), the adhesive (40) being injectable into the adhesive-receiving zone (34A) through the at least one opening (36).

8. The aircraft as defined in any one of claims 1 to 7, wherein the adhesive (40) includes a material being electrically insulating.

9. The aircraft as defined in any one of claims 1 to 8, wherein the pad (26) is a gasket and forms a seal between the base (19) and the structural member at least partially around the internal cavity(34).

10. The aircraft as defined in any one of claims 1 to 9, wherein the base (19) of the return mount (10) is secured to the structural member (9A) only via the adhesive.

11. The aircraft as defined in any one of claims 1 to 10, wherein the pad (26) is compressible along a direction between the first (20) and second surfaces (30).

12. An electrically-conductive mount assembly mountable to an electrically-conductive structure, the mount assembly comprising:
a return mount (210) having a base defining a base surface to face toward the structure, the return mount having an electrically-conductive portion to conduct electricity to the structure; and
an electrically-conductive pad (26) positioned on the base surface of the return mount (210), and having a surface abuttable against the structure, the pad (26) at least partially delimiting an internal cavity (34) configured to receive therein an adhesive (40) to adhere the base (19) to the structure, the pad (26) being electrically conductive to form a conductive path from the electrically-conductive portion of the return mount (210), through the pad (26), and to the structure, upon the base (19) being adhered to the structure.

13. The mount assembly as defined in claim 12, wherein the pad (26) includes at least one pad segment (27) completely delimiting the internal cavity (34) to form a closed-periphery internal cavity (34).

14. The mount assembly as defined in claim 13, wherein the at least one pad segment (27) includes a plurality of pad segments (27), each pad segment (27) being connected to another pad segment (27) to completely delimit the internal cavity (34).

15. The mount assembly as defined in claims 13 or 14, wherein the at least one pad segment (27) is free of apertures.
